# EUROPEAN PATENT APPLICATION

(11) **EP 4 836 179 A1**
(43) Date of publication of application: **04.11.2026**
(21) Application number: 25888352.9
(22) Date of filing: 03.11.2025
(51) Int. Cl.: H01M 50/559

(54) **BATTERY TERMINAL STRUCTURE AND BATTERY**

(30) Priority: 05.11.2024 CN 202422698371 U
(71) Applicant: Yunsa Power (Ningbo) Co., Ltd., Ningbo, Zhejiang 315000 (CN)
(72) Inventor: HU, Xinhua, Ningbo, Zhejiang 315000 (CN); LI, Changtao, Ningbo, Zhejiang 315000 (CN); YUE, Zhichong, Ningbo, Zhejiang 315000 (CN); YIN, Huatao, Ningbo, Zhejiang 315000 (CN); ZHU, Yuewu, Ningbo, Zhejiang 315000 (CN)
(74) Representative: Murgitroyd & Company
(86) International application number: PCT/CN2025/132073
(87) International publication number: WO 2026/098384

(57) **Abstract**

The present disclosure relates to the technical field of battery cells, and provides a battery terminal post structure and a battery including the battery terminal post structure. The battery terminal post structure includes a negative electrode assembly. The negative electrode assembly includes a negative terminal post and a negative busbar. The negative busbar is welded to an end of the negative terminal post, and includes a first busbar region and a second busbar region connected to each other. The second busbar region forms a bending portion at a connection location between the second busbar region and the first busbar region. An included angle of the second busbar region relative to the first busbar region is adjustable by bending the bending portion. The battery terminal post structure and the battery allow the welding appearance between the negative busbar and the negative terminal post to be visually inspected, so as to identify false welding or disconnected welding. In addition, the first busbar region of the negative busbar can be used as a connecting member during series connection or parallel connection without the need to use an additional connecting member, thereby achieving the beneficial effects of reducing welding points, optimizing battery internal resistance, and prolonging battery cycle life.

## Description

### CROSS REFERENCE TO RELATED APPLICATIONS

The present application is based upon and claims priority to Chinese patent application No. 202422698371.3, which is filed with China National Intellectual Property Administration on November 5, 2024, and the entire contents of which are incorporated herein by reference.

### TECHNICAL FIELD

The present disclosure relates to the technical field of battery cells, and in particular to a battery terminal post structure and a battery.

### BACKGROUND

Taking a cylindrical battery as an example, a structure of the cylindrical battery generally includes a positive busbar, a negative busbar, a positive terminal post, a negative terminal post, a positive top cover, a negative end cap, a sealing nail and a cell; a positive terminal is formed by welding the cell to the positive busbar and welding the positive busbar to a terminal post; and a negative terminal is formed by welding the cell to the negative busbar, welding the negative busbar to a housing, welding a bottom cover to the housing and welding the sealing nail to the bottom cover.

However, the cylindrical battery with the conventional structure includes a large number of battery structural members and adopts numerous multi-welding processes, so that on one hand, the internal structure of the battery is complex, and on the other hand, the resistance is high and the heat generation is large when current passes through a conductor welding structure, thereby affecting the cycle life of the battery.

In view of this, a cylindrical battery with a novel structure is urgently required in the market to solve the problems in the related art that the cylindrical battery has numerous positive and negative terminal welding processes, resulting in high battery resistance and affecting the cycle life of the battery.

### SUMMARY

An embodiment of the present disclosure provides a battery terminal post structure (or called a battery terminal structure) and a battery, so as to solve the problems that an existing cylindrical battery has numerous positive and negative terminal welding processes, resulting in high battery resistance and affecting the cycle life of the battery.

A battery terminal post structure provided by an embodiment of the present disclosure includes a negative electrode assembly;
the negative electrode assembly includes a negative terminal post and a negative busbar;
the negative busbar is welded to an end of the negative terminal post, and includes a first busbar region and a second busbar region which are connected to each other;
a bending portion is formed at a connection location between the second busbar region and the first busbar region; and
an included angle of the second busbar region relative to the first busbar region is adjustable by bending the bending portion.

In an embodiment, the bending portion may be bent at least twice at different crease positions; and
the first busbar region and the second busbar region may be bent in parallel.

In an embodiment, two opposite angle-division grooves may be formed on a side of the first busbar region close to the second busbar region.

In an embodiment, the negative electrode assembly may further include a negative top cover; and
the negative top cover may be press-riveted and sleeved on an outer peripheral wall of the negative terminal post through an outer insulating ring.

In an embodiment, the second busbar region of the negative busbar may be press-riveted and arranged on a lower side of the negative top cover through an inner insulating ring.

In an embodiment, the battery terminal post structure may further include a positive electrode assembly;
the positive electrode assembly may include a composite positive busbar, and a welding ring may be arranged in the composite positive busbar.

In an embodiment, the welding ring may be integrally connected to the composite positive busbar; and
the welding ring may be disposed at an outer peripheral portion of the composite positive busbar.

In an embodiment, the positive electrode assembly may further include a bottom cover; and
the welding ring of the composite positive busbar may be welded to the bottom cover through penetration welding.

In addition, an embodiment of the present disclosure further provides a battery, which includes a winding core and the battery terminal post structure;
the negative busbar of the negative electrode assembly is welded to a negative tab of the winding core; and
the composite positive busbar of the positive electrode assembly is welded to a positive tab of the winding core.

In an embodiment, the battery may further include a housing member; and
the negative electrode assembly and the positive electrode assembly may be hermetically welded to two ends of the housing member, respectively.

Compared with the related art, the technical solution provided by embodiments of the present disclosure has the advantages as follows:
in the battery terminal post structure provided by the embodiments of the present disclosure, a bottom end of the negative terminal post of the negative electrode assembly may be specifically welded to a side surface of the second busbar region of the negative busbar, the first busbar region on an opposite side of the other side of the second busbar region may be correspondingly welded to the negative tab of the winding core, the first busbar region of the negative busbar can also be correspondingly arranged to protrude outward, so that the welding appearance between the negative busbar and the negative terminal post can be visually inspected, so as to determine the phenomena of false welding or disconnected welding; since the second busbar region forms the bending portion at the connection location between the second busbar region and the first busbar region, bending the bending portion at a certain angle enables the first busbar region and the second busbar region to be parallel to each other and disposed in horizontal planes at different heights to form a structure similar to a "Z" shape. In this way, when a plurality of batteries are connected in series or in parallel, the first busbar region of the negative busbar can be used as a connecting member during series connection or parallel connection without an additional connecting member, thereby achieving the beneficial effects of reducing welding points, optimizing the internal resistance of the battery and prolonging the cycle service life of the battery.

In addition, a battery provided by an embodiment of the present disclosure includes the battery terminal post structure, and can achieve the same beneficial effects, which will not be repeated herein.

It should be understood that the content described in this section is not intended to identify critical or important features of the embodiments of the present disclosure, and is not used to limit the scope of the present disclosure either. The other features of the present disclosure will be easily understood through the specification below.

### BRIEF DESCRIPTION OF THE DRAWINGS

By reading the following detailed description with reference to the accompanying drawings, the above and other objectives, features and advantages of the exemplary embodiments of the present disclosure will become easier to understand. In the drawings, several embodiments of the present disclosure are shown in an exemplary and non-limiting manner.

In the drawings, the same or corresponding reference numerals represent the same or corresponding parts.
FIG. 1 is a schematic diagram of a negative electrode assembly in a battery terminal post structure according to an embodiment of the present disclosure.
FIG. 2 is a schematic diagram of a negative busbar in a battery terminal post structure according to an embodiment of the present disclosure.
FIG. 3 is a schematic diagram of a positive electrode assembly in a battery terminal post structure according to an embodiment of the present disclosure.
FIG. 4 is an exploded structural view of a battery according to an embodiment of the present disclosure.
FIG. 5 is a schematic diagram of a bottom of a battery according to an embodiment of the present disclosure.

Explanation of reference numerals in the drawings: 1. negative terminal post; 2. outer insulating ring; 3. negative top cover; 4. inner insulating ring; 5. negative busbar; 51, first busbar region; 511. angle-division groove; 52. second busbar region; 521. bending portion; 6. composite positive busbar; 61. welding ring; 7. bottom cover; 8. housing member.

### DETAILED DESCRIPTION OF PREFERRED EMBODIMENTS

To make the objectives, features and advantages of the present disclosure apparent and easy to understand, the technical solutions in the embodiments of the present disclosure will be clearly and completely described below with reference to the accompanying drawings in the embodiments of the present disclosure. Apparently, the embodiments described are only some rather than all of the embodiments of the present disclosure. All other embodiments obtained by those skilled in the art based on the embodiments of the present disclosure without any creative efforts shall fall within the protection scope of the present disclosure.

Embodiments of the present disclosure will be described below in detail with reference to the accompanying drawings.

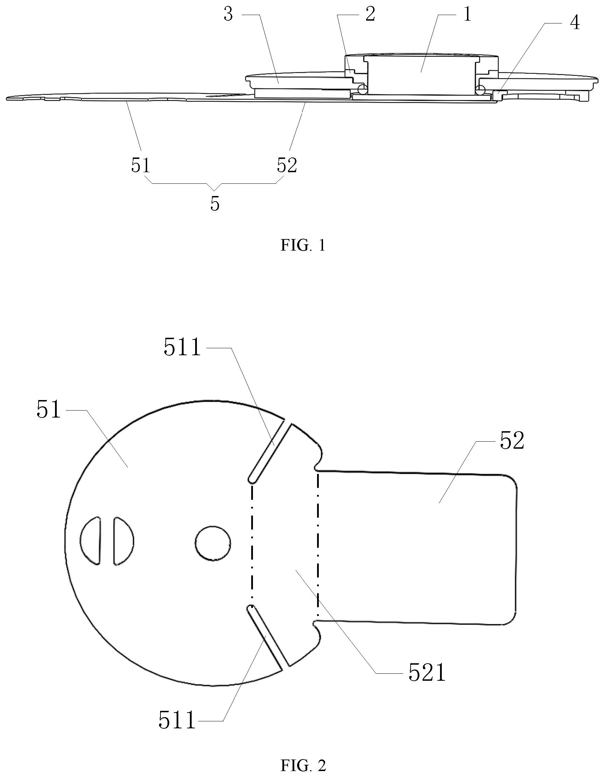

As shown in FIG. 1 and FIG. 2, an embodiment of the present disclosure provides a battery terminal post structure, which includes a negative electrode assembly; the negative electrode assembly includes a negative terminal post 1 and a negative busbar 5; the negative busbar 5 is welded to an end of the negative terminal post 1, and includes a first busbar region 51 and a second busbar region 52 which are connected to each other; the second busbar region 52 forms a bending portion 521 at a connection location between the second busbar region 52 and the first busbar region 51; and an included angle of the second busbar region 52 relative to the first busbar region 51 is adjustable by bending the bending portion 521.

During assembling of the battery terminal post structure, a bottom end of the negative terminal post 1 of the negative electrode assembly may be specifically welded to a side surface of the second busbar region 52 of the negative busbar 5, and the first busbar region 51 on an opposite side of the other side of the second busbar region 52 may be correspondingly welded to a negative tab in a winding core; in addition, the first busbar region 51 of the negative busbar 5 can also be correspondingly arranged to protrude outward, so that the welding appearance of the negative busbar 5 and the negative terminal post 1 can be visually inspected to determine the phenomena of false welding or disconnected welding.

In addition, since the second busbar region 52 forms the bending portion 521 at the connection location between the second busbar region 52 and the first busbar region 51, bending the bending portion 521 at a certain angle enables the first busbar region 51 and the second busbar region 52 to be parallel to each other and disposed in horizontal planes at different heights to form a structure similar to a "Z" shape. In this way, when a plurality of batteries are connected in series or in parallel, the first busbar region 51 of the negative busbar 5 can be used as a connecting member during series connection or parallel connection without an additional connecting member, so that the beneficial effects of reducing welding points, optimizing the internal resistance of a battery and prolonging the cycle service life of the battery can be achieved.

In an embodiment, the bending portion 521 may be bent at least twice at different crease positions; and the first busbar region 51 and the second busbar region 52 may be bent in parallel.

Specifically, referring to FIG. 2 for a further detailed description, the bending portion 521 is specifically configured as a rectangular sheet portion, and two long sides of the rectangular sheet portion are respectively connected to the first busbar region 51 and the second busbar region 52, so that bending grooves or bending creases may be respectively preformed in two long sides of the bending portion 521 correspondingly to relatively weaken the structural strength of the two long sides and form linear easy-to-bend creases. In this way, the first busbar region 51 and the second busbar region 52 can be bent in parallel to form the structure similar to the "Z" shape to better serve as the connecting member when batteries are connected in series or in parallel.

The specific arrangement method of the bending portion 521 of the negative busbar 5 has the beneficial effects of simple structure and convenience for bending the first busbar region 51 and the second busbar region 52 in parallel.

In an embodiment, two opposite angle-division grooves 511 are formed on a side of the first busbar region 51 close to the second busbar region 52.

Specifically, referring to FIG. 2 for a further detailed description, the two opposite angle-division grooves 511 are mutually inclined to form an obtuse-angle structure, and the two opposite angle-division grooves 511 are arranged symmetrically along the central axis of the negative busbar 5 in a length direction, so that when the negative busbar 5 bends the first busbar region 51 and the second busbar region 52 in parallel to each other through the bending portion 521, the two opposite angle-division grooves 511 can avoid stress concentration during the bending treatment, thereby avoiding tensile damage to the negative tab of the winding core caused by bending the negative busbar 5.

In an embodiment, the negative electrode assembly further includes a negative top cover 3; and the negative top cover 3 is press-riveted and sleeved on an outer peripheral wall of the negative terminal post 1 through an outer insulating ring 2.

Specifically, referring to FIG. 1 for a further detailed description, the negative top cover 3 is press-riveted and sleeved on the outer peripheral wall of the negative terminal post 1 through the outer insulating ring 2, so that the insulativity and sealability between the negative top cover 3 and the negative terminal post 1 can be ensured; furthermore, the compactness and reliability of a mounting structure of the negative top cover 3 can also be ensured by using a press-riveting process.

In an embodiment, the second busbar region 52 of the negative busbar 5 is press-riveted and arranged on a lower side of the negative top cover 3 through an inner insulating ring 4.

Specifically, referring to FIG. 1 for a further detailed description, similarly, the lower side of the negative top cover 3 is press-riveted and arranged in the second busbar region 52 of the negative busbar 5 through the inner insulating ring 4, so that the insulativity and sealability between the negative top cover 3 and the second busbar region 52 can be ensured.

In an embodiment, the battery terminal post structure further includes a positive electrode assembly; and the positive electrode assembly includes a composite positive busbar 6, and a welding ring 61 is arranged in the composite positive busbar 6.

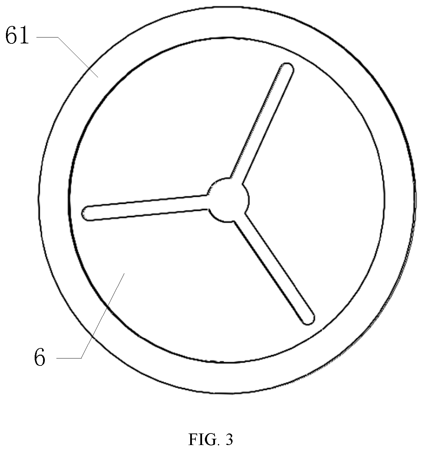

Specifically, referring to FIG. 3 for a further detailed description, the positive electrode assembly is configured as the composite positive busbar 6, and the welding ring 61 is arranged in the composite positive busbar 6, so that an inner side of the composite positive busbar 6 may be welded to a positive tab of the winding core, and an outer side of the composite positive busbar 6 may be welded and fixed to a bottom cover 7 of a battery through the welding ring 61.

In an embodiment, the welding ring 61 is integrally connected to the composite positive busbar 6; and the welding ring 61 is disposed at an outer peripheral portion of the composite positive busbar 6.

Specifically, referring to FIG. 3 for a further detailed description, the welding ring 61 is integrally connected to the composite positive busbar 6, and the welding ring 61 is disposed at the outer peripheral portion of the composite positive busbar 6, so that the welding ring 61 at the outer peripheral portion of the composite positive busbar 6 can form a closed peripheral welding ring, thereby fully ensuring the welding firmness and welding sealability of the composite positive busbar 6.

In an embodiment, the positive electrode assembly further includes a bottom cover 7; and the welding ring 61 of the composite positive busbar 6 may be welded to the bottom cover 7 through penetration welding.

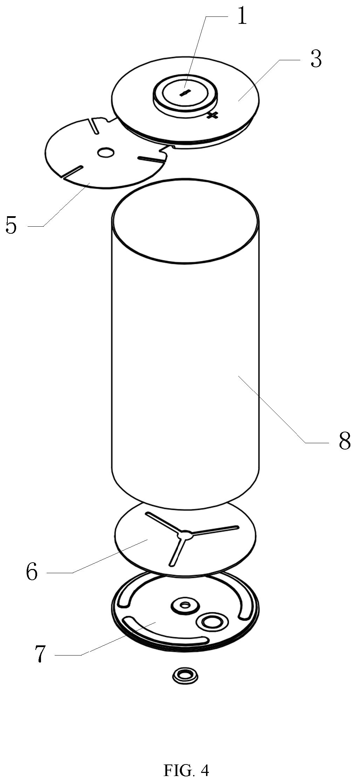

Specifically, referring to FIG. 4 for a further description, the welding ring 61 at the outer peripheral portion of the composite positive busbar 6 may be specifically welded to the bottom cover 7 of the battery directly through a laser penetration welding process, so that the welding firmness and welding sealability of those can be ensured while efficient welding is achieved.

In addition, an embodiment of the present disclosure further provides a battery, which includes a winding core and the above battery terminal post structure; the negative busbar 5 of the negative electrode assembly is welded to the negative tab of the winding core; and the composite positive busbar 6 of the positive electrode assembly is welded to the positive tab of the winding core.

Specifically, referring to FIG. 4 for a further detailed description, the battery includes the winding core and the above battery terminal post structure, which can achieve all the beneficial effects of the battery terminal post structure and will not be repeated herein.

In an embodiment, the battery further includes a housing member 8; and the negative electrode assembly and the positive electrode assembly are hermetically welded to two ends of the housing member 8, respectively.

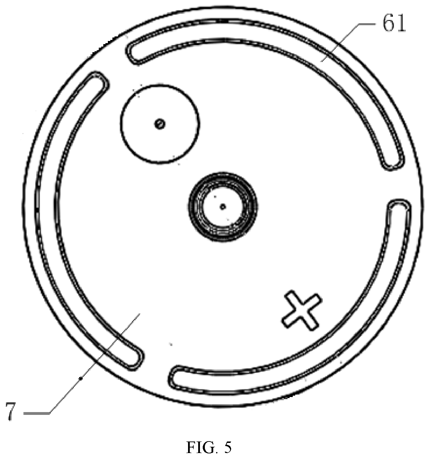

Specifically, referring to FIG. 4 and FIG. 5 for a further detailed description, the housing member 8 may be specifically, but not limited to, configured as a cylindrical member, so that the negative electrode assembly and the positive electrode assembly are hermetically welded to and cover two ends of the housing member 8, respectively.

During use of the battery terminal post structure of the present application, the positive electrode assembly is not limited to only serving as the positive electrode assembly; and similarly, the negative electrode assembly is not limited to only serving as the negative electrode assembly. Specifically, according to different types of batteries, during use, the negative electrode assembly can serve as the positive electrode assembly after the material is adjusted; furthermore, the positive electrode assembly can serve as the negative electrode assembly after the material is adjusted. The battery terminal post structure of the present application can be flexibly configured during use.

In addition, terms "first" and "second" are used merely for description, and shall not be construed as indicating or implying relative importance or implicitly indicating a quantity of indicated technical features. Therefore, the features defined by "first" and "second" may explicitly or implicitly include at least one of the features. In the description of the present disclosure, "a plurality of" means two or more than two, unless otherwise specified.

The above are merely specific implementations of the present disclosure, but the scope of protection of the present disclosure is not limited thereto, and any changes or replacements easily conceivable by those skilled in the art within the scope of the technology disclosed herein shall be covered within the scope of protection of the present disclosure. Therefore, the protection scope of the present disclosure shall be subject to the protection scope of the claims.

## Claims

1. A battery terminal post structure, comprising a negative electrode assembly;
wherein the negative electrode assembly comprises a negative terminal post (1) and a negative busbar (5);
the negative busbar (5) is welded to an end of the negative terminal post (1), and comprises a first busbar region (51) and a second busbar region (52) which are connected to each other;
a bending portion (521) is formed at a connection location between the second busbar region (52) and the first busbar region (51); and
an included angle of the second busbar region (52) relative to the first busbar region (51) is adjustable by bending the bending portion (521).

2. The battery terminal post structure according to claim 1, wherein the bending portion (521) is capable of being bent at least twice at different crease positions; and
the first busbar region (51) and the second busbar region (52) are capable of being bent in parallel.

3. The battery terminal post structure according to claim 1, wherein two opposite angle-division grooves (511) are formed on a side of the first busbar region (51) close to the second busbar region (52).

4. The battery terminal post structure according to claim 3, wherein the negative electrode assembly further comprises a negative top cover (3); and
the negative top cover (3) is press-riveted and sleeved on an outer peripheral wall of the negative terminal post (1) through an outer insulating ring (2).

5. The battery terminal post structure according to claim 4, wherein the second busbar region (52) of the negative busbar (5) is press-riveted and arranged on a lower side of the negative top cover (3) through an inner insulating ring (4).

6. The battery terminal post structure according to claim 1, further comprising: a positive electrode assembly;
wherein the positive electrode assembly comprises a composite positive busbar (6), and a welding ring (61) is arranged in the composite positive busbar (6).

7. The battery terminal post structure according to claim 6, wherein the welding ring (61) is integrally connected to the composite positive busbar (6); and
the welding ring (61) is disposed at an outer peripheral portion of the composite positive busbar (6).

8. The battery terminal post structure according to claim 6, wherein the positive electrode assembly further comprises a bottom cover (7); and
the welding ring (61) of the composite positive busbar (6) is welded to the bottom cover (7) through penetration welding.

9. A battery, comprising a winding core and the battery terminal post structure according to any one of claims 1 to 8, wherein
the negative busbar (5) of the negative electrode assembly is welded to a negative tab of the winding core; and
the composite positive busbar (6) of the positive electrode assembly is welded to a positive tab of the winding core.

10. The battery according to claim 9, further comprising a housing member (8);
wherein the negative electrode assembly and the positive electrode assembly are hermetically welded to two ends of the housing member (8), respectively.
